# EUROPEAN PATENT SPECIFICATION

(11) **EP 1 433 827 B1**
(45) Date of publication and mention of the grant of the patent: **22.02.2006**
(21) Application number: 03293333.5
(22) Date of filing: 24.12.2003
(51) Int. Cl.: C09D 175/04, C23C 22/00

(54) **Water-borne resin composition for treating steel sheet plated with an aluminium-zinc alloy, coating method using the same and steel sheet plated with an aluminium-zinc alloy**
Harz auf wässriger Basis für die Behandlung einer mit einer Aluminium-Zink-Legierung beschichteten Stahlplatte, Beschichtungsverfahren unter Verwendung derselben, und eine mit einer Aluminium-Zink-Legierung beschichtete Stahlplatte
Résine dispersée dans l'eau pour le traitement d'une tôle laminée avec une couche mince d'alliage d'aluminium-zinc, procédé de revêtement utilisant celle-ci, et une tôle laminée avec une couche mince d'alliage d'aluminium-zinc

(30) Priority: 26.12.2002 JP 2002377809
(43) Date of publication of application: 30.06.2004
(73) Proprietor: Nippon Paint Co., Ltd., Osaka-shi, Osaka 531-8511 (JP)
(72) Inventor: Tounaka, Atsuhiko, Kawasaki-shi Kanagawa 216-0007 (JP); Wada, Yutaka, Sakai-shi Osaka 599-8238 (JP)
(74) Representative: Hubert, Philippe

(56) References cited:
- WO-A-01/48264

## Description

### FIELD OF THE INVENTION

The present invention relates to a water-borne resin composition for treating a steel sheet plated with an aluminum-zinc alloy, a method of coating a steel sheet plated with an aluminum-zinc alloy, and a steel sheet plated with an aluminum-zinc alloy.

### BACKGROUND OF THE INVENTION

A steel sheet plated with an aluminum-zinc alloy is generally a steel sheet which is plated with an alloy of 4 to 75 weight % aluminum, zinc making up most of the rest and further a trace of silicon, magnesium and so on.

As the steel sheets plated with an aluminum-zinc alloy which go into actual use and are commercialized at present, there canbe given two kinds of steel sheets platedwith an aluminum-zinc alloy, namely, a steel sheet plated with a low aluminum-zinc alloy comprising 4 to 10 weight % aluminum, about 0.1 weight % magnesium, etc., and zinc as the rest portion and a steel sheet plated with a high aluminum-zinc alloy consisting of 55 weight % aluminum, 43.4 weight % zinc, and 1.6 weight % silicon.

When the steel sheet plated with an aluminum-zinc alloy is compared with a conventional hot dip galvanized steel sheet in the condition of the same plating thickness, the steel sheet plated with a low aluminum-zinc alloy has the corrosion resistance which is 1.5 to 2 times larger than that of the conventional hot dip galvanized steel sheet and the steel sheet plated with a high aluminum-zinc alloy has the corrosion resistance which is 3 to 6 times. Thus, since the steel sheets plated with an aluminum-zinc alloy have the high corrosion resistance and are aesthetically pleasant, they are widely used as building materials such as roof materials and wall materials, materials of products for civil works such as guardrails, sound barriers and drainers, materials for automobiles, household electrical appliances and industrial equipment and base plates of coated steel sheets.

However, since the steel sheets plated with aluminum-zinc alloy include aluminum added to plating layers, they generate, but not so much as galvanized steel sheets, rust when they are put in humid surroundings just as they are plated. Since color of rust is white in galvanized steel sheets and on the contrary, it is gray to black in the steel sheets plated with aluminum-zinc alloy, the steel sheets plated with aluminum-zinc alloy will be significantly deteriorated in marketability due to the blackening of their plated surface.

And, when the steel sheets plated with an aluminum-zinc alloy are used to building materials such as roof materials and wall materials and products for civil works such as guardrails, sound barriers and drainers, they often contact with materials including alkalinemetals or alkaline-earthmetals such as slate, concrete and the like, and the surfaces of the steel sheets plated with an aluminum-zinc alloy are affected from alkaline ingredients eluted from that material and blackened as a result to cause deterioration of appearances.

In Japanese Kokai Publication 2000-73179 (p.2), there is disclosed a coating material for steel sheet plated with an aluminum-zinc alloy, in which particles, in which polyurethane and vinyl polymer coexist, of high polymer compositions are dispersed. This provides a coating material for steel sheet plated with aluminum-zinc alloy, which has the resistance to blackening in an alkaline condition and the ability to be molded with roller, but the corrosion resistance and the resistance to blackening are not adequate.

In Japanese Kokai Publication 2001-81392 (p.2), there is disclosed a water system treating agent for under coating comprising one or more kinds of resins such as urethane resin, a silane coupling agent and fine particles having a particle diameter of 1 µm or less such as zirconia sol, a pH of which is preferably 2 to 10. Though this provides a treating agent capable of forming a coat having high corrosion resistance and adhesion to a coating film, zirconium becomes fine particles of zirconia, etc. in a formed coat because of use of zirconia and therefore the corrosion resistance and the resistance to blackening are not adequate.

In Japanese Kokai Publication 2002-30460 (p.2), there is disclosed a metallic surface treating agent comprising metal compound such as a vanadium compound and zirconium, water-soluble polymer such as urethane resin as required and/or water system emulsion resin and an etching agent such as an inorganic acid, an organic acid and a fluorine compound. This provides a treating agent capable of imparting high corrosion resistance and alkali resistance.

However, since this treating agent contains vanadium of which toxicity turn into problems and substantially requires an etching agent such as an inorganic acid, an organic acid and a fluorine compound in order to secure their performance, this is not preferable in terms of an environment. Further, the alkali resistance of a formed coat is not adequate.

As described above, there have been proposed various treating agents for applying to steel sheets plated with aluminum-zinc alloy but no treating agent capable of forming a coat, which has the high resistance to blackening, corrosion resistance and adhesion to a coating film and further has the high ability to be processed, has not been attained and therefore its development has been desired.

### SUMMARY OF THE INVENTION

In consideration of the above-mentioned situations, it is an object of the present invention to provide a water-borne resin composition for treating a steel sheet plated with an aluminum-zinc alloy which can be suitably applied to a steel sheet plated with an aluminum-zinc alloy and can impart the high ability to be processed, and the high corrosion resistance, resistance to blackening, weather resistance and adhesion to a coating film to the steel sheet and is also superior in the storage stability., a method of coating a steel sheet plated with an aluminum-zinc alloy using the same and a steel sheet plated with an aluminum-zinc alloy.

The present invention is a water-borne resin composition for treating a steel sheet plated with an aluminum-zinc alloy comprising
an anionic water-dispersed polyurethane (a), a silane coupling agent (b) and a water-soluble zirconium compound (c),
said anionic water-dispersed polyurethane (a) having a glass transition temperature (Tg) of 50°C or lower, and said water-soluble zirconium compound (c) being a substance, a pH of which becomes 7 to 11 in dissolving it in water, and
having a pH of 7 to 10.

Said water-borne resin composition for treating a steel sheet plated with an aluminum-zinc alloy preferably contains
the silane coupling agent (b) in an amount of 0.1 to 10 parts by mass (on a solid matter basis) and the water-soluble zirconium compound (c) in an amount of 0.1 to 10 parts by mass (on a solid matter basis), respectively, per 100 parts by mass (on a solid matter basis) of the anionic water-dispersed polyurethane (a).

Said water-soluble zirconium compound (c) is preferably zirconium ammonium carbonate.

Said water-borne resin composition for treating a steel sheet plated with an aluminum-zinc alloy preferably comprises
a cross-linking agent having reactivity with the anionic water-dispersed polyurethane (a).

Said cross-linking agent is preferably contained in an amount of 0.5 to 20 parts by mass (on a solid matter basis) per 100 parts by mass (on a solid matter basis) of the anionic water-dispersed polyurethane (a).

The water-borne resin composition for treating a steel sheet plated with an aluminum-zinc alloy preferably comprises
a wax having an average particle diameter of 0.5 to 3 µm in an amount of 0.1 to 1 parts by mass (on a solid matter basis) per 100 parts by mass (on a solid matter basis) of the anionic water-dispersed polyurethane (a).

The present invention is a method of coating a steel sheet plated with an aluminum-zinc alloy comprising
a step of applying said water-borne resin composition for treating a steel sheet plated with an aluminum-zinc alloy so as to be 1 to 3 µm in a dried film thickness.

The present invention is also a steel sheet plated with an aluminum-zinc alloy,
coated by the method of coating a steel sheet plated with an aluminum-zinc alloy.

Hereinafter, the present invention will be described in detail.

The water-borne resin composition for treating a steel sheet platedwith an aluminum-zinc alloy of the present invention can be suitably applied to a steel sheet plated with an aluminum-zinc alloy. By applying the water-borne resin composition to the steel sheet plated with an aluminum-zinc alloy, it is possible to form a coat, of which corrosion resistance, resistance to blackening, weather resistance and adhesion to a coating film are excellent, on the surface of a steel sheet and to impart the excellent ability to be processed to the steel sheet.

That is, with respect to the water-borne resin composition for treating a steel sheet plated with an aluminum-zinc alloy of the present invention, there are exerted an improvement in shielding effect of the coat and an improvement in the adhesion to a substrate and a top coating film, which are based on the anionic water-dispersed polyurethane (a) contained in the water-borne resin composition, an improvement in the adhesion to the substrate based on the silane coupling agent (b) and an improvement in the corrosion resistance based on the water-soluble zirconium compound (c) as their acts. Accordingly, it is possible to impart the high corrosion resistance, resistance to blackening, weather resistance and adhesion to a coating film to the steel sheet plated with an aluminum-zinc alloy and to form a coat which is also high in the ability to be processed.

The water-borne resin composition for treating a steel sheet plated with an aluminum-zinc alloy of the present invention contains an anionic water-dispersed polyurethane (a) . Thereby, it is possible to improve the adhesion to a steel sheet, being a substrate, plated with an aluminum-zinc alloy or a top coating film, the corrosion resistance, the resistance to blackening and the ability to be processed.

The above-mentioned anionic water-dispersed polyurethane (a) is one obtained by dispersing polyurethane having a carboxyl group in water through adding a basic compound such as ammonia. It is possible to improve the adhesion to a substrate or a top coating film by having the above-mentioned carboxyl group.

The above-mentioned anionic water-dispersed polyurethane (a) has a glass transition temperature (Tg) of 50°C or lower. Thereby, it is possible to improve a film formation property, the corrosion resistance and the resistance to blackening of the above water-borne resin composition for treating a steel sheet plated with an aluminum-zinc alloy, and it is also possible to form the coat superior in the ability to be processed. When the glass transition temperature is higher than 50°C, there is a possibility that the corrosion resistance and the resistance to blackening may be deteriorated because a film formation property during drying at a low temperature is deteriorated and there is also a possibility that the corrosion resistance of a processed portion may be deteriorated because a coat after drying is hard and a coat becomes apt to crack during being processed. A lower limit of the above-mentioned glass transition temperature (Tg) is preferably -20°C and more preferably -10°C. An upper limit of the above-mentioned glass transition temperature (Tg) is preferably 40°C and more preferably 30°C. Incidentally, the above glass transition temperature (Tg) was measured by a dynamic viscoelasticity measuring apparatus (RHEOLOGRAPH SOLID; manufactured by Toyo Seiki Seisaku-Sho, Ltd.)

Preferably, the above-mentioned anionic water-dispersed polyurethane (a) has an acid value of solid matter of 5 mgKOH/g as a lower limit and 40 mgKOH/g as an upper limit. Thereby, it is possible to attain the corrosion resistance, the resistance to blackening and the adhesion during forming a hilm together. When it has an acid value of solid matter less than 5 mgKOH/g, there is a possibility that the adhesion to a substance and a top coating film may be deteriorated and the stability of liquid may be deteriorated because it becomes difficult to disperse polyurethane in water. When it has an acid value of solid matter more than 40 mgKOH/g, there is a possibility that the corrosion resistance and the resistance to blackening during forming a film may be deteriorated since a carboxyl group is hydrophilic. The above lower limit is more preferably 10 mgKOH/g and furthermore preferably 15 mgKOH/g. The above upper limit is more preferably 35 mgKOH/g and furthermore preferably 30 mgKOH/g. Here, the above-mentioned acid value of solid matter of the anionic water-dispersed polyurethane (a) is a calculated value derived from an acid value of a raw material of polyurethane.

The above anionic water-dispersed polyurethane (a) is one formed by dispersing a resin having a carboxyl group in water through using a basic compound such as ammonia and the like as described above.

The above anionic water-dispersed polyurethane (a) is not specifically limited and it can be obtained, for example, by preparing an anionic polyurethane through polymerizing a constituent component containing a difunctional active hydrogen-containing compound having a polyhydric isocyanate, a polyhydric alcohol and an acid group using a publicly known method and further by dispersing the anionic polyurethane in water through adding a basic compound such as monohydric amine and the like.

The above-mentioned polyhydric isocyanate is not specifically limited, and as the polyhydric isocyanate, compounds which are conventionally known as a synthetic material of polyurethane emulsion can be used and, for example, ethylene diisocyanate, 1,6-hexamethylene diisocyanate, isophorone diisocyanate, cyclohexane-1,4-diisocyanate, 4,4'-dicyclohexylmethane diisocyanate, p-xylylene diisocyanate, 1,4-phenylene diisocyanate, 2,4-toluene diisocyanate, 2,6-toluene diisocyanate, 4,4'-diphenylmethane diisocyanate, 2,4'-diphenylmethane diisocyanate, polymethylene polyphenyl polyisocyanate, 1,5-naphthylene diisocyanate and so on can be given. Further, mixtures of these compounds can be used. And, difunctional isocyanates, which are modified with urethane, allophanate, urea, biuret, carboimide, urethane imine and an isocyanurate residual group can also be used.

The above-mentioned polyhydric alcohol is not specifically limited, and as the polyhydric alcohol, compounds which are conventionally known as a synthetic material of polyurethane emulsion can be used and, for example, polyester polyols, polyester polyamide polyols, polyether polyols, polythioether polyols, polycarbonate polyols, polyacetal polyols, polyolefine polyols and polysiloxane polyols can be given and the polyhydric alcohols having molecular weights of 500 to 5,000 are preferable. And, polyhydric alcohol of a low molecular weight may be added to the above-mentioned polyhydric alcohol as required. As the above-mentioned polyhydric alcohol which can be added, there can be given ethyleneglycol, propyleneglycol, 1,4-butanediol, diethyleneglycol, neopentylglycol, cyclohexanedimethanol, glycerol, trimethylolpropane and pentaerythritol.

The above-mentioned difunctional active hydrogen-containing compound having an acid group is not specifically limited, and as the difunctional active hydrogen-containing compound, compounds which are conventionally known as a synthetic material of anionic polyurethane emulsion can be used and, for example, 2,2-dimethylolpropanoic acid, 2,2-dimethylolbutanoic acid, lysine-cystine and 3, 5-diaminobenzoic acid can be given. These compounds have carboxyl groups in molecules and impart anionic properties and dispersibility in water to polyurethane.

As the above-mentionedmonohydric amine, there can be given alkyl amines such as trimethylamine, triethylamine, tributylamine, etc., nitrogen-containing heterocyclic compounds substituted with N-alkyl such as N-ethylmorpholine and the like.

The water-borne resin composition for treating a steel sheet plated with an aluminum-zinc alloy of the present invention contains a silane coupling agent (b). Thereby, it is possible to improve the adhesion to a steel sheet plated with an aluminum-zinc alloy, which is a substrate, the corrosion resistance and the resistance to blackening.

The above-mentioned silane coupling agent (b) is not specifically limited as long as it is a silane compound having a plurality of reactive functional groups, and as the silane coupling agent, there can be given vinyltrimethoxysilane, vinyltriethoxysilane, γ-aminopropyltrimethoxysilane, γ-aminopropylethoxysilane, N-[2-(vinylbenzilamino)ethyl]-3-aminopropyltrimethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, γ-glycidoxypropyltrimethoxysilane, γ-glycidoxypropyltriethoxysilane, γ-glycidoxypropylmethyldiethoxysilane, γ-glycidoxypropyltrimethoxysilane, 2-(3,4-epoxycyclohexyl)ethyltrimethoxysilane, N-β- (aminoethyl)-γ-aminopropyltrimethoxysilane, N-β-(aminoethyl)-γ-aminopropyltriethoxysilane, N-β- (aminoethyl)-γ-aminopropylmethyldimethoxysilane, N-phenyl-γ-aminopropyltrimethoxysilane and γ-mercaptopropyltrimethoxysilane, which are commercially available from Shin-Etsu Chemical Co., Ltd., Nippon Unicar Co., Ltd., CHISSO CORPORATION and GE Toshiba Silicones Co., Ltd. The above-mentioned silane compounds also include hydrolysates of silane.

The above-mentioned silane coupling agent (b) is preferably contained in an amount of 0.1 parts by mass as a lower limit and 10 parts by mass as an upper limit (on a solid matter basis) per 100 parts by mass (on a solid matter basis) of the anionic water-dispersed polyurethane (a) . When the amount of the above silane coupling agent (b) is less than 0.1 parts by mass, there is a possibility that the adhesion to the substrate maybe insufficient and improvements in the corrosion resistance and the resistance to blackening may not be adequately recognized because of a less addition rate. When it is more than 10 parts by mass, there is a possibility that the film formation property may become worse and the corrosion resistance and the resistance to blackening may be deteriorated and the stability of liquid may be deteriorated due to the generation of gelation and thickening of liquid. The above lower limit is more preferably 0.5 parts by mass and furthermore preferably 1 parts by mass. The above upper limit is more preferably 8 parts by mass and furthermore preferably 6 parts by mass.

The water-borne resin composition for treating a steel sheet plated with an aluminum-zinc alloy of the present invention contains a water-soluble zirconium compound (c). By the action of rust prevention which the water-soluble zirconium compound (c) has, it is possible to improve the corrosion resistance. And, the water-soluble zirconium compound (c) is a compound which cross-links with a carboxyl group in polyurethane, and thereby, it is possible to improve the corrosion resistance and the resistance to blackening. That is, it is considered that when fine particles of zirconia are used as a zirconium compound as a conventional treating agent, the likelihood of the zirconium compound to cross-links with resin in the formed coat is less since zirconia is not present in a state of being dissolved in the treating agent. On the other hand, it is considered that since the water-soluble zirconium compound (c) contained in the water-borne resin composition for treating a steel sheet plated with an aluminum-zinc alloy of the present invention is water-soluble and is present in a state of being dissolved in the water-borne resin composition, cross-linking between zirconium and a carboxyl group in resin in the above-mentioned anionic water-dispersed polyurethane (a) is advanced efficiently in a coat. Consequently, it is considered that it is possible to form the coat, in which cross-linking with the resin has adequately proceeded by using the water-borne resin composition for treating a steel sheet plated with an aluminum-zinc alloy containing the above water-soluble zirconium compound (c), on the steel sheet plated with an aluminum-zinc alloy and to improve the corrosion resistance and the resistance to blackening of the resulting steel sheet plated with an aluminum-zinc alloy. Further, when the water-borne resin composition is used in conjunction with the above silane coupling agent (b) and the above water-soluble zirconium compound (c), the corrosion resistance and the resistance to blackening can be dramatically improved by its synergistic effect compared with the case of using each compound alone.

The above-mentioned water-soluble zirconium compound (c) is a substance, a pH of which becomes 7 as a lower limit and 11 as an upper limit in dissolving it in water. Namely, a pH of an aqueous solution obtained by dissolving the above water-soluble zirconium compound (c) in water is 7 to 11. When a pH is lower than 7, there is a possibility that the corrosion resistance and the resistance to blackening may be deteriorated and the stability of liquid may be deteriorated due to the generation of gelation and thickening of liquid. For example, when a salt of an organic acid such as zirconium ammonium citrate (it shows a pH of 6 in dissolving it in water) or of an inorganic acid is used, it is not preferable since this tendency appears clearly. When it is higher than 11, there is a possibility that the surface of the steel sheet is etched and this may cause an appearance defect. The above lower limit is preferably 8 and the above upper limit is preferably 10.

The above-mentioned water-soluble zirconium compound (c) is not specifically limited as long as it is a compound containing zirconium, a pH of which becomes 7 to 11 in dissolving it in water, and particularly, it is preferably zirconium ammonium carbonate. When the water-soluble zirconium compound (c) is zirconium ammonium carbonate, since a cross-linking between zirconium in the compound and a carboxyl group in resin is advanced more efficiently, the coating, of which the ability to be processed, the resistance to blackening and the corrosion resistance are excellent, is formed, and therefore the water-borne resin composition of the present invention can be suitably applied particularly to a steel sheet plated with an aluminum-zinc alloy.

The above-mentioned water-soluble zirconium compound (c) is preferably contained in an amount of 0.1 parts by mass as a lower limit and 10 parts by mass as an upper limit (on a solid matter basis) per 100 parts by mass (on a solid matter basis) of the anionic water-dispersed polyurethane (a). When the amount of the above water-soluble zirconium compound (c) is less than 0.1 parts by mass, there is a possibility that the adhesion to the substrate and improvements in the corrosion resistance and the resistance to blackening may not be adequately recognized because of a less addition rate. When it is more than 10 parts by mass, there is a possibility that the film formation property may become worse and the corrosion resistance and the resistance to blackening may be deteriorated and the stability of liquid may also be deteriorated due to the generation of gelation and thickening of liquid. The above lower limit is more preferably 0.5 parts by mass and furthermore preferably 1 parts by mass. The above upper limit is more preferably 8 parts by mass and furthermore preferably 6 parts by mass.

The water-borne resin composition for treating a steel sheet plated with an aluminum-zinc alloy of the present invention has a pH of 7 as a lower limit and 10 as an upper limit. Thereby, it can form the coat of which the ability to be processed, the resistance to blackening, the corrosion resistance and the adhesion to a coating film are excellent. When the above-mentioned water-borne resin composition for treating a steel sheet plated with an aluminum-zinc alloy is a substance being acid, if this water-borne resin composition is applied to the surface of a steel sheet, the formed coat may become poor in the ability to be processed, the corrosion resistance, the resistance to blackening, and the adhesion to a coating film, but since the above-mentioned water-borne resin composition for treating a steel sheet plated with an aluminum-zinc alloy is a substance exhibiting a pH of 7 to 10, it can form the coating which is superior in these performances. The reason for a difference in the performance between the case of being acid and the case of being 7 to 10 in a pH like this is not definite but can be guessed as follows. When the water-borne resin composition is acid, the surface of a steel sheet may be etched and therefore the performances of a coat to be formed may be poor, and on the contrary, because the water-borne resin composition for treating a steel sheet plated with an aluminum-zinc alloy of the present invention exhibits a pH of 7 to 10, it is less etched than the water-borne resin composition which is acid and therefore it is guessed that it is possible to form a coat which adequately has acts exerted by components contained in the water-borne resin composition. That is, it is guessed that there is a differences in the performance of the coat to be formed since a mechanism to form a coat from the water-borne resin composition for treating a steel sheet plated with an aluminum-zinc alloy of the present invention exhibitting a pH of 7 to 10 is different from that of the case of being acid.

When the above pH is lower than 7, there is a possibility that the corrosion resistance and the resistance to blackening may be deteriorated and the stability of liquid may be deteriorated due to the generation of gelation and thickening of liquid. When it is higher than 10, there is a possibility that the surface of a steel sheet is etched and this may cause an appearance defect. The lower limit of pH is preferably 7.5 and the upper limit of pH is preferably 9.5.

The above-mentioned water-borne resin composition for treating a steel sheet plated with an aluminum-zinc alloy may further comprise a cross-linking agent having reactivity with the above anionic water-dispersed polyurethane (a). By making the water-borne resin composition contain the above-mentioned cross-linking agent, the above cross-linking agent reacts and cross-links with a carboxyl group in polyurethane and the corrosion resistance and the resistance to blackening of a coat can be improved.

The above-mentioned cross-linking agent is not specifically limited as long as it is a compound having reactivity with a carboxyl group in resin, and for example, polyfunctional epoxy compounds, organic titanium compounds, amino resins, block isocyanates, carbodiimide compounds, aziridinic compounds and oxazolinic compounds can be given. Among them, carbodiimide compounds can be suitably used when low-temperature curability is required.

Though the above-mentioned carbodiimide compounds are not specifically limited, a carbodiimide compound having two or more carbodiimide groups in a molecule is preferred. As such a carbodiimide compound, there can be given modified polycarbodiimide compounds having at least two carbodiimide groups and having a poly(alkylene oxide) unit, which is blocked with a monoalkoxy group having at least 4 carbon atoms at one end, in a molecule.

The above-mentioned carbodiimide group is a functional group represented by -N=C=N-. Number of the above-mentioned carbodiimide group contained in amolecule of the above-mentioned modified polycarbodiimide compounds is at least two and preferably, it is substantially 20 or less in consideration of a reaction efficiency.

The above-mentioned poly(alkylene oxide) unit is a unit represented, for example, by R¹-O-(CH₂-CHR²-O-)ₘ- (R¹ is an alkyl group with 4 to 20 carbon atoms, R² is a hydrogen atom or a methyl group and m is an integer of 4 to 30.), and poly (ethylene oxide) or poly(propylene oxide) blocked with an alkoxy group at each end or one which is obtained by eliminating active hydrogen from monoalkoxy polyalkylene glycol consisting of a mixture thereof.

The above-mentioned unit is combined with both ends of a molecule of the above modified polycarbodiimide compound by an urethane linkage. The above modified polycarbodiimide compound can be obtained by reacting a polycarbodiimide compound having isocyanate groups at both ends with a monoalkoxy polyalkylene glycol.

As a method of producing the above-mentioned polycarbodiimide compound having isocyanate groups at both ends, there can be utilized a condensation reaction which is well known to the those skilled in the art and involves the withdrawal of carbon dioxide of organic diisocyanates.

The above-mentioned organic diisocyanates is not specifically limited, and there may be mentioned aromatic diisocyanates, aliphatic diisocyanates, alicyclic diisocyanates and a mixture thereof, and the polyhydric isocyanates described in the descriptions of the above anionic water-dispersed polyurethane (a). In the above-mentioned condensation reaction, a carbodiimidated catalyst is normally used.

The above-mentioned reaction of the polycarbodiimide compound having isocyanate groups at both ends and the monoalkoxy polyalkylene glycol is preferably conducted by setting in such a way that the number of moles of a hydroxyl group of the monoalkoxy polyalkylene glycol is equal to or larger than that of an isocyanate group. As the above-mentioned monoalkoxy polyalkylene glycol, publicly known compounds can be adopted. As a method of a reaction, there can be adopted a method which is well known to the those skilled in the art, and, for example by mixing the both compounds and reacting the mixture through heating it to 60 to 120°C, the above modified polycarbodiimide compound can be obtained.

The above-mentioned oxazolinic compound is not specifically limited, and there may be mentioned, for example, a compound having at least one and half of oxazolinic groups in a molecule on an average. The above oxazolinic compounds preferably has 2 to 50 of oxazolinic groups in a molecule on an average. As a residual group with which the oxazolinic group combines, there can be given aliphatic groups, aromatic groups, alicyclic groups and groups of combination thereof. Though as the above-mentioned residual group with which the oxazolinic group combines, compounds of a low molecular weight or compounds of a high molecular weight may be used, styrenic polymer and styrene-acrylic copolymer are particularly preferable. As a commercial product of the above oxazolinic compound, there can be given water-dispersed substances such as "EPOCROS K-2020E" (produced by NIPPON SHOKUBAI CO., LTD.), "EPOCROS K-2030E" (produced by NIPPON SHOKUBAI CO., LTD.), "EPOCROS WS-500" (produced by NIPPON SHOKUBAI CO., LTD.), etc.

The above-mentioned aziridinic compound is not specifically limited, and there may be mentioned, for example, a compound having at least one and half of aziridinic groups in a molecule on an average. The above aziridinic compound preferably has 2 to 50 of aziridinic groups in a molecule on an average. As a residual group with which the aziridinic group combines, substances containing heteroatoms such as oxygen, sulfur, nitrogen and the like may also be used and aliphatic groups, aromatic groups, alicyclic groups and groups of combination thereof can be given. As the above-mentioned residual group with which the aziridinic group combines, compounds of a low molecular weight or compounds of a high molecular weight may be used.

As the above aziridinic compound, there can be given N,N'-hexamethylene-1,6-bis(1-aziridinecarboxamide), N,N'-diphenylmethane-4,4'-bis(1-aziridinecarboxamide), trimethylolpropane-tri-β-aziridinyl propionate, N,N'-toluene-2,4-bis(1-aziridinecarboxamide), triethylene melamine, trimethylolpropane-tri(β-methylaziridine) propionate, bisisophthaloyl-1,2-methylaziridine, tri-1-aziridinylphosphine oxide, tris-1,2-methylaziridinephosphine oxide and the like. And, as a commercial product of water-dispersed aziridinic compounds, there can be given, for example, "SU-125F" (produced by MEISEI CHEMICAL WORKS, LTD.), "DZ-22E" (produced by NIPPON SHOKUBAI CO., LTD.) and the like.

When the above water-borne resin composition for treating a steel sheet plated with an aluminum-zinc alloy contains a cross-linking agent, it preferably contains the cross-linking agent in an amount of 0.5 parts by mass as a lower limit and 20 parts by mass as an upper limit per 100 parts by mass (on a solid matter basis) of the above anionic water-dispersed polyurethane (a) from the viewpoint of the corrosion resistance, the resistance to blackening, the adhesion to a coating film and the stability of liquid. When the amount of the above cross-linking agent is less than 0.5 parts by mass, there is a possibility that improvements in the corrosion resistance and the resistance to blackening may not be adequate because the amount of the cross-linking agent is insufficient. When it is more than 20 parts by mass, there is a possibility that an acid value in the coat is decreased and the adhesion to a substrate and a top coating film may be deteriorated and the stability of liquid may also be deteriorated due to the generation of gelation and thickening of liquid. The above lower limit is more preferably 1 parts by mass and furthermore preferably 2 parts by mass. The above upper limit is more preferably 15 parts by mass and furthermore preferably 10 parts by mass. As a functional group contained in the above cross-linking agent having reactivity with a carboxyl group contained in the above anionic water-dispersed polyurethane (a), there can be given, for example, a carbodiimide group, an oxazoline group, an aziridine group, an epoxy group and an isocyanate group.

Preferably, the above water-borne resin composition for treating a steel sheet plated with an aluminum-zinc alloy further contains a wax having an average particle diameter of 0.5 µm as a lower limit and 3 µm as an upper limit. By containing the wax having an average particle diameter within this range, it is possible to expose the wax physically above the surface of a coat and to impart the lubricity and to improve the ability to be processed by a small amount of addition. Since wax is generally water-dispersed by using a dispersant such as a surfactant, the water resistance of a coat to be formed is often deteriorated, but the water-borne resin composition for treating a steel sheet plated with an aluminum-zinc alloy of the present invention hardly affects the performances of a coat because this can impart the lubricity and improve the ability to be processed by a small amount of addition.

When the above-mentioned average particle diameter of wax is smaller than 0.5 µm, adequate lubricity cannot be attained in the case of not increasing a wax addition rate and water resistance may be deteriorated in the case of increasing a wax addition rate. Therefore, it is not preferable to adopt the wax having the average particle diameter smaller than 0.5 µm. When the average particle diameter is larger than 3 µm, there is a possibility that the stability of liquid maybe deteriorated due to the generation of separation and precipitation of wax by secular changes. More preferably, the above lower limit is 1 µm and the above upper limit is 2.5 µm.

The above-mentioned wax is preferably contained in an amount of 0.1 parts by mass as a lower limit and 1 parts by mass as an upper limit (on a solid matter basis) per 100 parts by mass (on a solid matter basis) of the anionic water-dispersed polyurethane (a). When the amount of the above wax is less than 0.1 parts by mass, there is a possibility that an improvement in the ability to be processed may not be adequate owing to lack of lubricity. When it is more than 1 parts by mass, there is a possibility that the corrosion resistance, the resistance to blackening and the adhesion to a top coating film may be deteriorated. The above lower limit is more preferably 0.2 parts by mass and furthermore preferably 0.3 parts by mass. The above upper limit is more preferably 0.8 parts by mass and furthermore preferably 0.6 parts by mass.

The above-mentioned wax is not specifically limited and all general waxes can be adopted, and as the wax, for example, polyethylene wax, polypropylene wax, paraffin and microcrystalline wax can be given. Among them, polyethylene wax is preferable from the viewpoint of the ability to be processed.

To the above water-borne resin composition for treating a steel sheet plated with an aluminum-zinc alloy, a film formation aid, a wetting agent, an antifoaming agent, etc. may be added depending on its uses. For example, when the water-borne resin composition tends to foam, addition of an antifoaming agent imparts a foam-breaking property, and when the water-borne resin composition tends to be repellent, addition of an wetting agent imparts wettability. And, a solvent may be used as a film formation aid in order to form a more uniform and flat coat. The above-mentioned solvent is not specifically limited, and there may be mentioned one being generally used in coatings, for example, alcoholic solvents, ketonic solvents, ester solvents, etheric solvents and the like.

A method of coating a steel sheet plated with an aluminum-zinc alloy of the present invention is a method of applying the above water-borne resin composition for treating a steel sheet plated with an aluminum-zinc alloy.

The method of coating the steel sheet plated with an aluminum-zinc alloy with the above water-borne resin composition for treating a steel sheet plated with an aluminum-zinc alloy is not specifically limited, and the above water-borne resin composition can be applied with an applying means and method similar to that of usual emulsion coating such as roll coater, immersion coating, spray coating, brush coating, electrostatic coating and the like. Also, a method of drying is not specifically limited and as the dryingmethod, a method of heating with hot air after applying and drying, and a method, in which a substrate to be coated has been previously heated and then is coated with the above water-borne resin composition for treating a steel sheet plated with an aluminum-zinc alloy during hot and dried through the use of residual heat, may be used.

With respect to the above-mentioned drying conditions, drying temperature is preferably 50°C as a lower limit and 250°C as an upper limit. When it is lower than 50°C, there is a possibility that the corrosion resistance and the resistance to blackening may be deteriorated because an adequate film formation property cannot be attained due to low evaporation rate of water. When it is higher than 250°C, there is a possibility that the corrosion resistance and the resistance to blackening may be deteriorated due to occurrence of thermal decomposition and an appearance may become worse due to yellowing. More preferably, the above lower limit is 70°C and the above upper limit is 220°C. Drying time in thermally drying after coating is preferably 1 second to 5 minutes.

The above-mentioned method of coating a steel sheet plated with an aluminum-zinc alloy is preferably a method of coating in such a way that the dried film thickness of the coat is preferably 1 µm at a lower limit and 3 µm at an upper limit. When the dried film thickness is less than 1 µm, there is a possibility that the corrosion resistance, the resistance to blackening, the weather resistance and the ability to be processed are deteriorated. When it is more than 3 µm, it is economically disadvantageous and inconvenient in applying. More preferably, the above lower limit is 1.5 µm and the above upper limit is 2.5 µm.

The steel sheet plated with an aluminum-zinc alloy, coated by the above-mentioned method of coating a steel sheet plated with an aluminum-zinc alloy, is superior in the ability to be processed, the resistance to blackening, the corrosion resistance and the adhesion to a coating film, and can be suitably used as materials of building materials, products for civil works, automobiles, household electrical appliances and industrial equipment. The dried film thickness of the coat formed on the above-mentioned coated steel sheet plated with an aluminum-zinc alloy is preferably 1 µm at a lower limit and 3 µm at an upper limit.

The water-borne resin composition for treating a steel sheet platedwith an aluminum-zinc alloy of the present invention comprises the anionic water-dispersed polyurethane (a) which has a glass transition temperature (Tg) of 50°C or lower, the silane coupling agent (b) and the water-soluble zirconium compound (c), a pH of which becomes 7 to 11 in dissolving it in water, and has a pH of 7 to 10. That is, since this composition contains the specific anionicwater-dispersedpolyurethane (a), it can improve the adhesion to a substrate and a top coating film, the corrosion resistance and the resistance to blackening, and further it can dramatically improve the corrosion resistance and the resistance to blackening by being used in conjunction with the silane coupling agent (b) and the water-soluble zirconium compound (c). And, since it exhibits a pH of 7 to 10, it can improve the corrosion resistance and the resistance toblackening. Therefore, it can form the coat, which is superior in a film formation property and also superior in the resistance to blackening, the corrosion resistance and the adhesion to a coating film, on the steel sheet plated with an aluminum-zinc alloy. Particularly, when the above-mentioned water-soluble zirconium compound (c) is zirconium ammonium carbonate, a more excellent coat in these performances can be formed. Therefore, a steel sheet plated with an aluminum-zinc alloy which is applied the water-borne resin composition for treating a steel sheet plated with an aluminum-zinc alloy of the present invention can be suitably used as materials of building materials, products for civil works, automobiles, household electrical appliances and industrial equipment and as base plates for coated steel sheets.

Since the water-borne resin composition for treating a steel sheet plated with an aluminum-zinc alloy of the present invention is constituted as described above, it can be suitably applied to a steel sheet plated with an aluminum-zinc alloy and can impart the high ability to be processed, and the high corrosion resistance, resistance to blackening, weather resistance and adhesion to a coating film and is also superior in the storage stability. Therefore, a steel sheet plated with an aluminum-zinc alloy which is applied the water-borne resin composition for treating a steel sheet plated with an aluminum-zinc alloy of the present invention can be suitably used as building materials such as roof materials and wall materials, materials of products for civil works such as guardrails, sound barriers and drainers, materials for automobiles, household electrical appliances and industrial equipment and base plates of coated steel sheets.

### EXAMPLES

Hereinafter, the present invention will be described in detail bywayof examples, but the present invention is not limited by these examples. And, in Examples, unless otherwise specified, a term "parts" means "parts by mass".

### Examples 1 to 8 and Comparative Examples 1 to 6

### (Preparation of a water-borne resin composition for treating a steel sheet plated with an aluminum-zinc alloy)

An anionic water-dispersed polyurethane, a silane coupling agent and a zirconium compound, kinds of which are shown in Table 1, were put in a container in this order according to each solid matter concenyration shown in Table 1 and the mixture was stirred for 5minutes and then the solidmatter concentrations of water-borne resin compositions were adjusted to be 25% by addition of deionized water to obtain water-borne resin compositions for treating a steel sheet plated with an aluminum-zinc alloy.

### Examples 9 to 16

An anionic water-dispersed polyurethane, a silane coupling agent, a zirconium compound, a cross-linking agent and wax, kinds of which are shown in Table 1, were put in a container in this order according to each solid matter concentration shown in Table 1 and the mixture was stirred for 10 minutes and then the solid matter concentrations of water-borne resin compositions were adjusted to be 25% by addition of deionized water to obtain water-borne resin compositions for treating a steel sheet plated with an aluminum-zinc alloy.

Kinds (a1 to a5) of anionic water-dispersed polyurethane shown in Table 1 are shown below.
a1: SUPERFLEX 420 (water-dispersed polyurethane of polycarbonates, solid content 32%; produced by DAI-ICHI KOGYO SEIYAKU CO., LTD.)
a2: SUPERFLEX 150HS (water-dispersed polyurethane of polyester polyethers, solid content 38%;producedby DAI-ICHI KOGYO SEIYAKU CO., LTD.)
a3: SUPERFLEX 110 (water-dispersed polyurethane of polyethers, solid content 30%; produced by DAI-ICHI KOGYO SEIYAKU CO., LTD.)
a4: SUPERFLEX 130 (water-dispersed polyurethane of polyethers, solid content 35%; produced by DAI-ICHI KOGYO SEIYAKU CO., LTD.)
a5: SUPERFLEX 410 (water-dispersed polyurethane of polycarbonates, solid content 30%; produced by DAI-ICHI KOGYO SEIYAKU CO., LTD.)

Kinds (b1 to b4) of silane coupling agents shown in Table 1 are shown below.
b1: Sila-Ace S-510 (3-glycidoxypropyltrimethoxysilane, solid content 100%; produced by CHISSO CORPORATION)
b2: Sila-Ace S-330 (3-aminopropyltrimethoxysilane, solid content 100%; produced by CHISSO CORPORATION)
b3: Sila-Ace S-210 (vinyltrimethoxysilane, solid content 100%; produced by CHISSO CORPORATION)
b4: Sila-Ace S-810 (3-mercaptopropyltrimethoxysilane, solid content 100%; produced by CHISSO CORPORATION)

Kinds (c1 to c3) of zirconium compounds shown in Table 1 are shown below. Here, c1 and c2 are water-soluble zirconium compounds and c3 is a water-dispersed zirconium compound.
c1: Zircosol AC-7 (zirconium ammonium carbonate, solid content 13%; produced by DAIICHI KIGENSO KAGAKU KOGYO CO., LTD.)
c2: zirconium ammonium citrate (solid content 12%; produced by DAIICHI KIGENSO KAGAKU KOGYO CO., LTD.)
c3: Zirconiasol NZS-30B (zirconia sol, solid content 30%; produced by NISSAN CHEMICAL INDUSTRIES, LTD.)

Kinds (d1 to d3) of cross-linking agents shown in Table 1 are shown below.
d1: VP-56 (cross-linking agent of carbodiimides, solid content 71%; produced by Nippon Paint Co., Ltd.)
d2: FS-50 (aziridinic cross-linking agent, solid content 28%; produced by MEISEI CHEMICAL WORKS, LTD.)
d3: EPOCROS WS-500 (oxazolinic cross-linking agent, solid content 40%; produced by NIPPON SHOKUBAI CO., LTD.)

Kinds (el to e3) of waxes shown in Table 1 are shown below.
e1: NOPCO 1245MS-N (microcrystalline wax, solid content 46%; produced by San Nopco Ltd.)
e2: CHEMIPEARLW-300 (low molecular weight polyolefin wax, solid content 40%; produced by Mitsui Chemicals, Inc.)
e3: CHEMIPEARLW-900 (low molecular weight polyolefin wax, solid content 40%; produced by Mitsui Chemicals, Inc.)

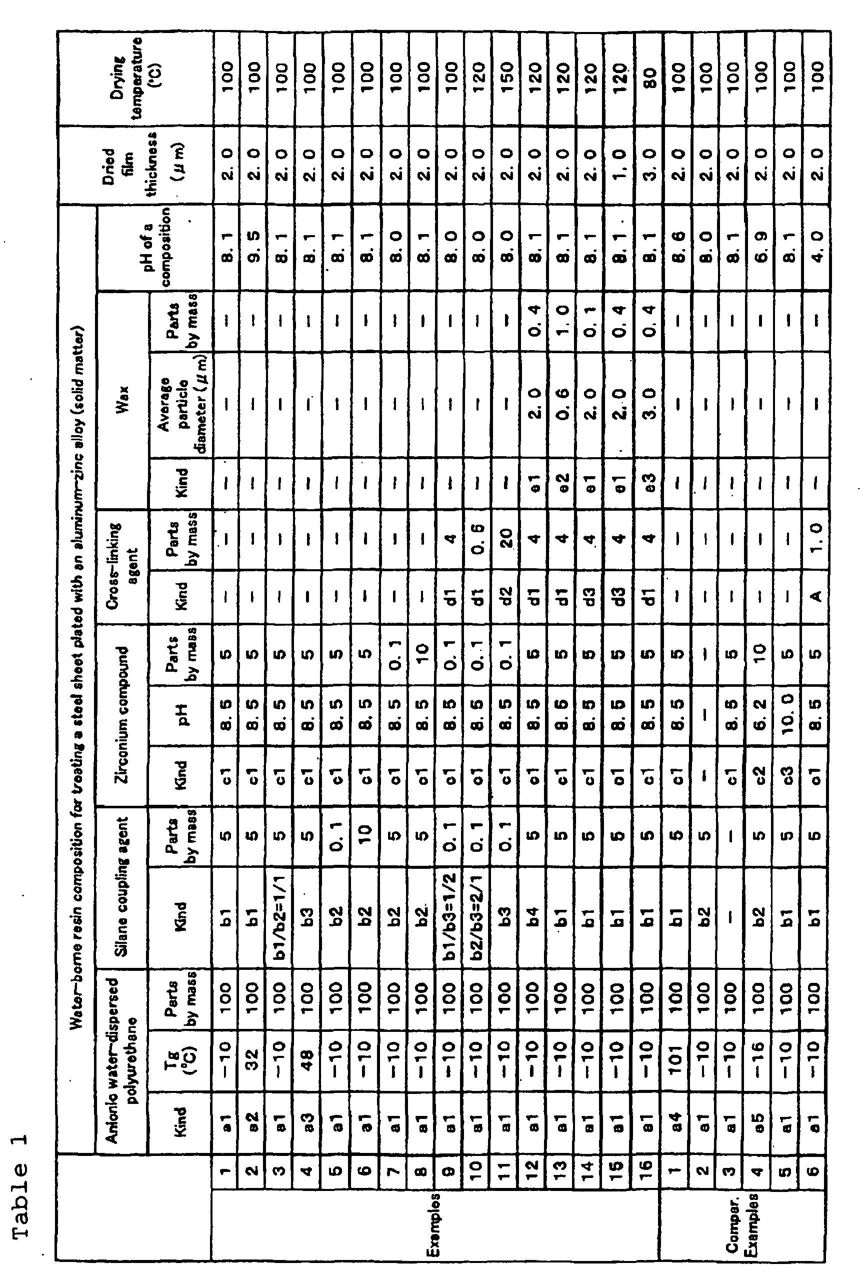

### (Preparation of test plate)

The water-borne resin compositions for treating a steel sheet plated with an aluminum-zinc alloy obtained in Examples and Comparative Examples was applied to the surface of a commercially available hot-dip 55 weight % aluminum-zinc alloy coated steel sheet, which had been degreased and cleaned and has a plate thickness of 0.5 mm, with a barcoater in such a way that a dried film thickness was 1 to 3 µm and dried in such a way that a temperature which an adherend reaches is 80 to 150°C using an electric hot air drying oven. The dried steel sheet was cooled and taken as a test plate. The corrosion resistance, the resistance to blackening, the weather resistance, the ability to be processed and the adhesion to a coating film of the test plate and the storage stability of the water-borne resin composition for treating a steel sheet plated with an aluminum-zinc alloy were evaluated according to the following evaluation methods and the results of evaluations are shown in Table 2.

### (Evaluation methods)

### <Corrosion resistance>

A flat portion of the test plate and a processed portion, which was extruded by 7 mm with an Erichsen tester, of the test plate were subjected to salt spray testing according to JIS Z 2371. After a lapse of 120 hours since salt spray testing, a rate of area where white rust is generated was measured and evaluated according to the following criteria.
⊚: area where white rust is generated is less than 10%
○: area where white rust is generated is at least 10% and less than 30%
Δ: area where white rust is generated is at least 30% and less than 50%
×: area where white rust is generated is at least 50%

### <Resistance to blackening>

The test plate was immersed for 1 hour in a 1% sodium hydroxide solution and a state of blackening was evaluated according to the following criteria.
⊚: there is not blackening
○: there is slightly blackening
Δ: there is blackening
×: blackening is remarkable

### <Weather resistance>

The test plate was subjected to a duty cycle tester and a ratio of gloss retention was measured after a lapse of 100 hours and evaluated according to the following criteria.
⊚ : a ratio of gloss retention is 70% or more
○: a ratio of gloss retention is 50% or more and less than 70%
Δ: a ratio of gloss retention is 30% or more and less than 50%
×: a ratio of gloss retention is less than 30%

### <Ability to be processed>

The test plate was placed with the coated side up and on this test plate, another test plate, which had been extruded by 5 mm with an Erichsen tester, was put and moved to and fro six times with a load of 1 kg being applied. An amount of a coat peeled around a rubbed portion was evaluated according to the following criteria.
⊚ :few peeling
○: slight peeling
Δ: a few peeling
×: a lot of peeling

### <Adhesion to a coating film>

An acrylic resin coating (Super Rack 100, produced by Nippon Paint Co., Ltd.) was applied to the test plate with a barcoater in such a way that a dried film thickness was 20 µm and baked at 160°C for 20 minutes using a hot air drying oven to obtain a coated plate. Next, the coated plate was immersed in boiled water for 2 hours, and then the surface of the coated plate was provided with 100 of grids in a size of 1 mm square using a cutter and the coated plate was extruded by 6 mm with an Erichsen tester. Then, an adhesive tape was bonded to the extruded portion and then peeled. After peeling, number of remaining grids of the surface of the coated plate was measured and evaluated according to the following criteria.
⊚: number of remaining grids 100
○: number of remaining grids 81 - 99
Δ: number of remaining grids 51 - 80
×: number of remaining grids 50 or less

### <Storage stability>

The water-borne resin compositions for treating a steel sheet plated with an aluminum-zinc alloy obtained in Examples and Comparative Examples were left at a room temperature for 30 days and then these compositions were evaluated according to the following criteria.
⊚: no change
○: slightly thickening (level of using without problems)
Δ: thickening
×: gelation

**Table 2**

| | | Corrosion resistance | | Resistanceto blackening | Weather resistance | Ability to be to be processed | Adhesion to a coating film | Storage stability |
|---|---|---|---|---|---|---|---|---|
| | | flat portion | processed portion | | | | | |
| Examples | 1 | ⊚ | ⊚ | ⊚ | ⊚ | ○ | ⊚ | ⊚ |
| | 2 | ⊚ | ○ | ⊚ | ⊚ | ○ | ⊚ | ⊚ |
| | 3 | ⊚ | ⊚ | ⊚ | ⊚ | ○ | ⊚ | ⊚ |
| | 4 | ⊚ | ○ | ○ | ⊚ | ○ | ⊚ | ⊚ |
| | 5 | ○ | ○ | ○ | ⊚ | ○ | ○ | ⊚ |
| | 6 | ○ | ○ | ○ | ⊚ | ○ | ⊚ | ○ |
| | 7 | ○ | ○ | ○ | ⊚ | ○ | ⊚ | ⊚ |
| | 8 | ○ | ○ | ○ | ⊚ | ○ | ⊚ | ○ |
| | 9 | ⊚ | ⊚ | ⊚ | ⊚ | ○ | ⊚ | ⊚ |
| | 10 | ○ | ○ | ○ | ⊚ | ○ | ⊚ | ○ |
| | 11 | ⊚ | ⊚ | ⊚ | ⊚ | ○ | ○ | ⊚ |
| | 12 | ⊚ | ⊚ | ⊚ | ⊚ | ⊚ | ⊚ | ⊚ |
| | 13 | ⊚ | ⊚ | ⊚ | ⊚ | ⊚ | ⊚ | ⊚ |
| | 14 | ⊚ | ⊚ | ⊚ | ⊚ | ⊚ | ⊚ | ⊚ |
| | 15 | ⊚ | ⊚ | ○ | ○ | ○ | ⊚ | ⊚ |
| | 16 | ⊚ | ⊚ | ⊚ | ⊚ | ⊚ | ⊚ | ⊚ |
| Comparative Examples | 1 | ○ | Δ | Δ | ⊚ | ○ | Δ | ⊚ |
| | 2 | ○ | Δ | Δ | ○ | ○ | ⊚ | ⊚ |
| | 3 | ○ | Δ | Δ | ○ | ○ | ○ | ⊚ |
| | 4 | Δ | × | × | ○ | ○ | ○ | × |
| | 5 | ○ | Δ | Δ | ○ | ○ | ○ | Δ |
| | 6 | × | × | × | Δ | Δ | Δ | × |

As shown in Table 2, the water-borne resin compositions for treating a steel sheet plated with an aluminum-zinc alloy obtained in Examples were superior in the storage stability and test plates obtained by applying the water-borne resin composition for treating a steel sheet plated with an aluminum-zinc alloy were superior in the corrosion resistance, the resistance to blackening, the weather resistance and the ability to be processed. Further, the coated plates obtained by coating the test plate had the high adhesion to a coating film.

## Claims

1. A water-borne resin composition for treating a steel sheet plated with an aluminum-zinc alloy comprising
an anionic water-dispersed polyurethane (a), a silane coupling agent (b) and a water-soluble zirconium compound (c),
said anionic water-dispersed polyurethane (a) having a glass transition temperature (Tg) of 50°C or lower and said water-soluble zirconium compound (c) being a substance, a pH of which becomes 7 to 11 in dissolving it in water, and
having a pH of 7 to 10.

2. The water-borne resin composition for treating a steel sheet plated with an aluminum-zinc alloy according to Claim 1,
containing the silane coupling agent (b) in an amount of 0.1 to 10 parts by mass (on a solid matter basis) and
the water-soluble zirconium compound (c) in an amount of 0.1 to 10 parts by mass (on a solid matter basis), respectively, per 100 parts by mass (on a solid matter basis) of the anionic water-dispersed polyurethane (a).

3. The water-borne resin composition for treating a steel sheet plated with an aluminum-zinc alloy according to Claim 1 or 2,
wherein said water-soluble zirconium compound (c) is zirconium ammonium carbonate.

4. The water-borne resin composition for treating a steel sheet plated with an aluminum-zinc alloy according to any of Claims 1 to 3, comprising
a cross-linking agent having reactivity with the anionic water-dispersed polyurethane (a).

5. The water-borne resin composition for treating a steel sheet plated with an aluminum-zinc alloy according to Claim 4,
wherein said cross-linking agent is contained in an amount of 0.5 to 20 parts by mass (on a solid matter basis) per 100 parts by mass (on a solid matter basis) of the anionic water-dispersed polyurethane (a).

6. The water-borne resin composition for treating a steel sheet plated with an aluminum-zinc alloy according to any of Claims 1 to 5, comprising
a wax having an average particle diameter of 0.5 to 3 µm in an amount of 0.1 to 1 parts by mass (on a solid matter basis) per 100 parts by mass (on a solid matter basis) of the anionic water-dispersed polyurethane (a).

7. A method of coating a steel sheet plated with an aluminum-zinc alloy comprising
a step of applying the water-borne resin composition for treating a steel sheet plated with an aluminum-zinc alloy according to any of Claims 1 to 6 so as to be 1 to 3 µm in a dried film thickness.

8. A steel sheet plated with an aluminum-zinc alloy,
coated by the method of coating a steel sheet plated with an aluminum-zinc alloy according to claim 7.

## Patentansprüche

1. Eine Harzzusammensetzung auf wässriger Basis zur Behandlung einer mit einer Aluminium-Zink-Legierung beschichteten Stahlplatte, umfassend
ein anionisches in Wasser dispergiertes Polyurethan (a), ein Silan-Kopplungsmittel (b) und eine wasserlösliche Zirkoniumverbindung (c),
wobei das anionische in Wasser dispergierte Polyurethan (a) eine Glasübergangstemperatur (Tg) von 50°C oder weniger aufweist und die wasserlösliche Zirkoniumverbindung (c) eine Substanz ist, deren pH beim Lösen von dieser in Wasser 7 bis 11 wird, und
welche einen pH von 7 bis 10 aufweist.

2. Die Harzzusammensetzung auf wässriger Basis zur Behandlung einer mit einer Aluminium-Zink-Legierung beschichteten Stahlplatte gemäß Anspruch 1,
welche das Silan-Kopplungsmittel (b) in einer Menge von 0,1 bis 10 Massenteilen (auf der Basis der festen Stoffe) bzw.
die wasserlösliche Zirkoniumverbindung (c) in einer Menge von 0,1 bis 10 Massenteilen (auf der Basis der festen Stoffe) pro 100 Massenteilen (auf der Basis der festen Stoffe) des anionischen in Wasser dispergierten Polyurethans (a) enthält.

3. Die Harzzusammensetzung auf wässriger Basis zur Behandlung einer mit einer Aluminium-Zink-Legierung beschichteten Stahlplatte gemäß Anspruch 1 oder 2,
wobei die wasserlösliche Zirkoniumverbindung (c) Zirkoniumammoniumcarbonat ist.

4. Die Harzzusammensetzung auf wässriger Basis zur Behandlung einer mit einer Aluminium-Zink-Legierung beschichteten Stahlplatte gemäß irgendeinem der Ansprüche 1 bis 3, umfassend
ein Vernetzungsmittel, das eine Reaktivität mit dem anionischen in Wasser dispergierten Polyurethan (a) aufweist.

5. Die Harzzusammensetzung auf wässriger Basis zur Behandlung einer mit einer Aluminium-Zink-Legierung beschichteten Stahlplatte gemäß Anspruch 4,
wobei das Vernetzungsmittel in einer Menge von 0,5 bis 20 Massenteilen (auf der Basis der festen Stoffe) pro 100 Massenteilen (auf der Basis der festen Stoffe) des anionischen in Wasser dispergierten Polyurethans (a) enthalten ist.

6. Die Harzzusammensetzung auf wässriger Basis zur Behandlung einer mit einer Aluminium-Zink-Legierung beschichteten Stahlplatte gemäß irgendeinem der Ansprüche 1 bis 5, umfassend
ein Wachs mit einem durchschnittlichen Teilchendurchmesser von 0,5 bis 3 µm in einer Menge von 0,1 bis 1 Massenteilen (auf der Basis der festen Stoffe) pro 100 Massenteilen (auf der Basis der festen Stoffe) des anionischen in Wasser dispergierten Polyurethans (a).

7. Ein Verfahren zur Beschichtung einer mit einer Aluminium-Zink-Legierung beschichteten Stahlplatte, umfassend
einen Schritt des Auftragens der Harzzusammensetzung auf wässriger Basis zur Behandlung einer mit einer Aluminium-Zink-Legierung beschichteten Stahlplatte gemäß irgendeinem der Ansprüche 1 bis 6, so dass dieses eine Dicke des getrockneten Films von 1 bis 3 µm ergibt.

8. Eine mit einer Aluminium-Zink-Legierung beschichtete Stahlplatte, die durch das Verfahren des Beschichtens einer mit einer Aluminium-Zink-Legierung beschichteten Stahlplatte gemäß Anspruch 7 beschichtet wurde.

## Revendications

1. Composition de résine à base d'eau pour traiter une tôle d'acier plaquée avec un alliage aluminium-zinc comprenant
un polyuréthane anionique (a) dispersé dans l'eau, un agent de couplage constitué par un silane (b) et un composé de zirconium soluble dans l'eau (c),
ledit polyuréthane anionique (a) dispersé dans l'eau présentant une température de transition vitreuse (Tg) inférieure ou égale à 50°C et ledit composé de zirconium soluble dans l'eau (c) étant une substance dont le pH atteint une valeur de 7 à 11 lorsqu'on la dissout dans l'eau et
présentant un pH de 7 à 10.

2. Composition de résine à base d'eau pour traiter une tôle d'acier plaquée avec un alliage aluminium-zinc selon la revendication 1,
contenant respectivement l'agent de couplage constitué par un silane (b) en une quantité de 0,1 à 10 parties en masse (sur la base des matières solides) et
le composé de zirconium soluble dans l'eau (c) en une quantité de 0,1 à 10 parties en masse (sur la base des matières solides) pour 100 parties en masse (sur la base des matières solides) du polyuréthane anionique (a) dispersé dans l'eau.

3. Composition de résine à base d'eau pour traiter une tôle d'acier plaquée avec un alliage aluminium-zinc selon la revendication 1 ou 2,
dans laquelle ledit composé de zirconium soluble dans l'eau (c) est le carbonate d'ammonium et de zirconium.

4. Composition de résine à base d'eau pour traiter une tôle d'acier plaquée avec un alliage aluminium-zinc selon l'une quelconque des revendications 1 à 3, comprenant
un agent de réticulation présentant une réactivité avec le polyuréthane anionique (a) dispersé dans l'eau.

5. Composition de résine à base d'eau pour traiter une tôle d'acier plaquée avec un alliage aluminium-zinc selon la revendication 4,
dans laquelle ledit agent de réticulation est contenu en une quantité de 0,5 à 20 parties en masse (sur la base des matières solides) pour 100 parties en masse (sur la base des matières solides) du polyuréthane anionique (a) dispersé dans l'eau.

6. Composition de résine à base d'eau pour traiter une tôle d'acier plaquée avec un alliage aluminium-zinc selon l'une quelconque des revendications 1 à 5 comprenant
une cire présentant un diamètre de particule moyen de 0,5 à 3 µ en une quantité de 0,1 à 1 partie en masse (sur la base des matières solides) pour 100 parties en masse (sur la base des matières solides) du polyuréthane anionique (a) dispersé dans l'eau.

7. Procédé pour recouvrir une tôle d'acier plaquée avec un alliage aluminium-zinc comprenant
une étape d'application de la composition de résine à base d'eau pour traiter une tôle d'acier plaquée avec un alliage aluminium-zinc selon l'une quelconque des revendications 1 à 6 de manière à avoir une épaisseur du film séché de 1 à 3 µ.

8. Tôle d'acier plaquée avec un alliage aluminium-zinc recouverte par le procédé de revêtement d'une tôle d'acier plaquée avec un alliage aluminium-zinc selon la revendication 7.
